# EUROPÄISCHE PATENTSCHRIFT

(11) **EP 2 652 350 B1**
(45) Veröffentlichungstag und Bekanntmachung des Hinweises auf die Patenterteilung: **15.04.2015**
(21) Anmeldenummer: 11808167.8
(22) Anmeldetag: 16.12.2011
(51) Int. Cl.: F16D 3/74

(54) **VERFAHREN ZUM HERSTELLEN EINES KUPPLUNGSSEGMENTES EINER ELASTISCHEN KUPPLUNG**
METHOD FOR PRODUCING A COUPLING SEGMENT OF A FLEXIBLE COUPLING
PROCÉDÉ DE FABRICATION D'UN SEGMENT D'ACCOUPLEMENT D'UN ACCOUPLEMENT ÉLASTIQUE

(30) Priorität: 17.12.2010 DE 102010055018
(43) Veröffentlichungstag der Anmeldung: 23.10.2013
(73) Patentinhaber: Hackforth GmbH, 44653 Herne (DE)
(72) Erfinder: KASTNER, Torsten, 45711 Datteln (DE); GÖDECKE, Gunnar, 58313 Herdecke (DE)
(74) Vertreter: Isfort, Olaf
(86) Internationale Anmeldenummer: PCT/EP2011/006385
(87) Internationale Veröffentlichungsnummer: WO 2012/079772

(56) Entgegenhaltungen:
- DE-U1- 20 212 204
- DE-U1-202007 001 430
- US-A1- 2002 082 091

## Beschreibung

Die Erfindung betrifft ein Verfahren zum Herstellen eines Kupplungssegmentes einer segmentierten, elastischen Kupplung, wobei ein Elastomerkörper zwischen zwei metallischen Anschlussflanschen angeordnet und der Elastomerkörper durch Vulkanisation zur Ausbildung eines Kupplungskörpers stoffschlüssig mit den beiden Anschlussflanschen verbunden wird.

Die Erfindung betrifft des Weiteren eine segmentierte, elastische Kupplung mit wenigstens zwei Kupplungssegmenten, die zur Ausbildung der Kupplung miteinander verbindbar sind.

Eine segmentierte, elastische Kupplung ist beispielsweise in Form einer segmentierten, drehelastischen Wellenkupplungen aus DE 202 12 204 U1 bekannt. Diese weist zwei Segmente auf, die zur Herstellung der segmentierten, drehelastischen Wellenkupplung miteinander verbindbar sind. Jedes Segment weist zwei, in der genannten Druckschrift als Segmentplatten bezeichnete, metallische Anschlussflansche auf, die durch Vulkanisation stoffschlüssig mit einem zwischen ihnen angeordneten Elastomerkörper verbunden sind. Die Anschlussflansche bzw. Segmentplatten werden herkömmlich aus Blechmaterial ausgeschnitten.

Eine solche segmentierte, drehelastische Wellenkupplung wird beispielsweise in einem drehmomentübertragenden Antriebsstrang zwischen einem Motor und einer Arbeitsmaschine eingesetzt, um Drehschwingungen innerhalb des Antriebsstrangs zu dämpfen. Ein typischer Anwendungsfall ist der Antriebsstrang eines Schiffes zwischen Motor und Propeller. Die drehelastische Wellenkupplung wird hierbei mit ihrem Antriebsflansch bzw. mit ihrem Abtriebsflansch an die zu ihr benachbarten Maschinenelemente angeflanscht, wie beispielsweise an die Schwungscheibe eines Motors oder an eine Welle. Darüber hinaus kann eine solche segmentierte, drehelastische Wellenkupplung einen radialen und axialen Versatz einzelner Abschnitte des Antriebsstrangs zueinander ausgleichen. So wird beispielsweise das Getriebe eines Schiffes in der Regel fest gelagert, während der Schiffsdiesel elastisch gelagert ist. Der durch Vibrationen und Rumpfverformungen bedingte Versatz des Motors wird durch eine segmentierte, drehelastische Wellenkupplung, welche zwischen Motor und Getriebe angeordnet ist, kompensiert.

Eine derart segmentierte, drehelastische Wellenkupplung hat gegenüber einer nicht segmentierten, drehelastischen Wellenkupplung mehrere Vorteile. So ergeben sich zum einen zusätzliche konstruktionstechnische Freiheitsgrade. Außerdem lassen sich groß dimensionierte, segmentierte, drehelastische Wellenkupplungen in zerlegter Form auf einfache Art und Weise an den jeweiligen Einsatzort bringen, dort montieren und ebenso einfach auch wieder ausbauen und abtransportieren.

Hinsichtlich der Fertigung von segmentierten, drehelastischen Wellenkupplungen ist festzuhalten, dass eine kundenorientiert individuelle Ausgestaltung der Wellenkupplungen insbesondere hinsichtlich der jeweilig gewünschten Anzahl von Segmenten und deren Dimensionierung pro Wellenkupplung sehr kostenaufwendig ist, da die Segmente herkömmlich separat voneinander hergestellt werden müssen und für jede Dimensionierung der Segmente ein eigener Fertigungsprozess bereitgestellt werden muss.

Hiervon ausgehend ist es die Aufgabe der Erfindung, ein neuartiges Verfahren zum Herstellen eines Kupplungssegmentes einer segmentierten, elastischen Kupplung zu schaffen, mit dem die Herstellungskosten solcher Kupplungen deutlich reduziert werden können.

Diese Aufgabe wird ausgehend von einem Verfahren der eingangs genannten Art dadurch gelöst, dass das Kupplungssegment mittels Wasserstrahlschneiden aus dem Kupplungskörper ausgeschnitten wird, wobei der Wasserstrahl den Elastomerkörper und wenigstens einen der beiden Anschlussflansche gleichzeitig schneidet.

Erfindungsgemäß können unterschiedlichst ausgebildete Kupplungssegmente auf einfache und damit kostengünstigere Art und Weise hergestellt werden, indem ein Kupplungssegment mit einer gewünschten Formgebung einfach mittels Wasserstrahlschneiden aus dem einen Rohling bildenden Kupplungskörper ausgeschnitten wird. Es ist nicht erforderlich, für jede individuelle Formgebung eines Kupplungssegmentes einen individuellen Fertigungsprozess und dabei verwendete Fertigungsmittel bereitzuhalten, was mit hohen Kosten verbunden wäre. Es genügt beispielsweise die Herstellung eines einheitlichen Rohlings bestimmten Ausmaßes, aus dem wenigstens ein Kupplungssegment mit einer gewünschten Formgebung ausgeschnitten werden kann.

Durch die mit der Erfindung erreichbare große Formvielfalt von herstellbaren Kupplungssegmenten ist es zudem möglich, unterschiedlichst ausgebildete segmentierte, elastische Kupplungen bereitzustellen, welche aus diesen Kupplungssegmenten zusammensetzbar sind.

Wasserstrahlschneiden hat sich für das Ausschneiden des Kupplungssegmentes als besonders vorteilhaft erwiesen, da beim Wasserstrahlschneiden keine erhöhten Schneidetemperaturen auftreten, welche sich negativ auf die Eigenschaften des Elastomerkörpers sowie der Verbindungsbereiche zwischen den Anschlussflanschen und dem Elastomerkörper auswirken würden.

Das Wasserstrahlschneiden kann in Form von Reinwasserstrahlschneiden gegeben sein, bei dem lediglich die Strahlenergie des Wassers ausgenutzt wird. Es kann dem Wasser aber auch ein Schneidmittel (Abrasiv), wie beispielsweise Granat oder Korund, beigemengt werden, um die Schneidleistung zu erhöhen.

Mittels Wasserstrahlschneiden können unterschiedlichst ausgebildete Schnitte vorgenommen werden, was die sehr individuelle und dennoch relativ kostengünstige Fertigung von Kupplungssegmenten ermöglicht. Gleichzeitig mit dem Elastomerkörper können auch beide Anschlussflansche durchschnitten werden. Eine vorteilhafte Ausgestaltung der Erfindung sieht vor, dass die metallischen Anschlussflansche vorab zumindest teilweise in einem Gießverfahren hergestellt werden. Dieses ist von Vorteil, da die in einem Gießverfahren teilweise oder vollständig hergestellten metallischen Anschlussflansche mit geringeren Fertigungstoleranzen hergestellt werden können. Die Qualität eines mit derartigen Anschlussflanschen ausgestatteten Kupplungssegmentes ist deutlich gegenüber solchen erhöht, bei denen die Anschlussflansche ausgehend von Blechen durch Umformverfahren hergestellt werden, was auch für eine aus solchen Kupplungssegmenten gebildete segmentierte, elastische Kupplung gilt. Gemäß dieser Ausgestaltung der Erfindung können auch Anschlussflansche bereitgestellt werden, die einen federnden Gussteil und einen damit verbundenen, aus einer Stahlplatte ausgeschnittenen und eben ausgebildeten Anschlussteil umfassen.

Nach einer weiteren vorteilhaften Ausgestaltung der Erfindung wird an dem Kupplungssegment wenigstens eine durch das gesamte Kupplungselement verlaufende Lüftungsöffnung mittels Wasserstrahlschneiden ausgebildet, die sich von einem Anschlussflansch zu anderen erstreckt. Die Positionierung der Lüftungsöffnung kann unter Verwendung des Wasserstrahlschneidens auf einfache Art und Weise individuell variiert werden, ohne dass hierdurch die Herstellungskosten merklich erhöht werden. Auch eine Variation der Anzahl der Lüftungsöffnungen in dem Kupplungssegment kann so ohne hohen Kostenaufwand individuell variiert werden. Zudem können die Größe und Form der Lüftungsöffnungen auf einfache Art und Weise individuell variiert werden. Dies verbessert die Freiheit bei der Auslegung. Bei herkömmlichen Kupplungssegmenten muss hingegen auch die Anordnung von solchen Lüftungsöffnungen bei der separaten Herstellung dieser Kupplungssegmente erfolgen, was mit hohen Herstellungskosten einhergeht.

Gemäß einer weiteren vorteilhaften Ausgestaltung der Erfindung werden ein ringförmig ausgebildeter Elastomerkörper und zwei ringförmig ausgebildete metallische Anschlussflansche verwendet und koaxial zueinander angeordnet, wobei durch die Vulkanisation als Kupplungskörper eine ringförmig ausgebildete, drehelastische Wellenkupplung gebildet wird. Somit wird zunächst auf im Wesentlichen herkömmliche Art und Weise eine nicht segmentierte, ringförmig ausgebildete, drehelastische Wellenkupplung hergestellt, die anschließend mittels Wasserstrahlschneiden in eine gewünschte Anzahl von separaten Kupplungssegmenten zerlegt wird. Die einzelnen Kupplungssegmente müssen nicht durch kostspielige, separate Fertigungsprozesse hergestellt werden, wie es aus dem Stand der Technik bekannt ist. Stattdessen wird die nicht segmentierte, drehelastische Wellenkupplung in einem einzigen Herstellungsvorgang gefertigt, wonach das Zerschneiden dieser Wellenkupplung mittels Wasserstrahlschneiden in einem zweiten Arbeitsschritt erfolgt. Hierbei kann ein Zerlegen der drehelastischen Wellenkupplung in nahezu jede beliebige Anzahl von Kupplungssegmenten erfolgen, ohne dass hierdurch die Herstellungskosten merklich ansteigen. Durch das erfindungsgemäße Verfahren sind somit unterschiedlichst ausgestaltete, segmentierte, drehelastische Wellenkupplungen mit im Wesentlichen denselben Verfahrensschritten herstellbar. Dieses ermöglicht den Aufbau einer sehr kosteneffizienten Produktion von drehelastischen Wellenkupplungen.

Nach einer weiteren vorteilhaften Ausgestaltung der Erfindung wird das Kupplungssegment durch wenigstens zwei radiale Schnitte an der ringförmig ausgebildeten, drehelastischen Wellenkupplung ausgebildet. Nach dem erfindungsgemäßen Verfahren sind jedoch auch je nach Anforderung und Kundenwunsch andere Schnittrichtungen sowie in irgendeiner Weise ungerade Schnitte möglich, ohne dass hierdurch die Herstellungskosten einer segmentierten, drehelastischen Wellenkupplung erhöht werden würden.

Bei einer bevorzugten Ausgestaltung des erfindungsgemäßen Verfahrens weisen die Anschlussflansche Ausnehmungen auf, die von den Elastomerkörper durchsetzt sind. Die Ausnehmungen werden beim Vulkanisationsvorgang von dem Elastomerkörper ausgefüllt, sodass bei dem fertigen Kupplungssegment der Elastomerkörper zum Beispiel mit der Oberfläche des Anschlussflansches im Bereich der Ausnehmungen bündig abschließt. Bevorzugt sind die genannten Ausnehmungen endseitig geschlossene radiale Schlitze. Die Schnittführung beim Wasserstrahlschneiden zur Herstellung der Kupplungssegmente kann dann entlang der Ausnehmungen verlaufen. Dies bewirkt, dass das Material des Elastomerkörpers (typischerweise eine gefüllte Kautschukmasse) um die Metallkante des jeweiligen Anschlussflansches herum gelegt ist. Dadurch wird der Vorteil erreicht, dass sich das Material des Elastomerkörpers bei dynamischer Beanspruchung der Kupplung nicht so leicht von dem metallischen Anschlussflansch im Bereich der Schnittkante ablöst.

Weitere Maßnahmen zur Optimierung der Kupplungssegmente hinsichtlich der Spannungen und Dehnungen, die im Elastomerkörper bei dynamischer Beanspruchung auftreten, sind möglich:
Beispielsweise kann aus dem Elastomerkörper wenigstens ein in Radialrichtung der Kupplung verlaufender Kanal ausgeschnitten werden. Typischerweise sind mehrere derartige Kanäle über den Umfang der Kupplung verteilt angeordnet. Im Sinne einer gleichmäßigen Spannungs- und Dehnungsverteilung im Elastomermaterial kann der Durchmesser des Kanals beziehungsweise der Kanäle in Radialrichtung der Kupplung jeweils von innen nach außen zunehmen. Dies korrespondiert zu der proportional zum Radius anwachsenden relativen Verdrehung der antriebs- und abtriebsseitigen Anschlussflansche bei Drehmomentbelastung der Kupplung. Die Schnittführung beim Wasserstrahlschneiden verläuft dann bevorzugt parallel zur Längsachse des Kanals beziehungsweise der Kanäle. Dies bewirkt im Ergebnis, dass die Spannungs- und Dehnungsverteilung im Elastomerkörper im Bereich der durch den Schnitt erzeugten Metallkante der Anschlussflansche optimiert ist, sodass sich der Elastomerkörper bei Drehmomentbelastung der Kupplung nicht vom Metall ablöst. Durch Kombination der oben erwähnten radialen Schlitze mit den in Radialrichtung der Kupplung verlaufenden Kanälen, wobei die Schnittführung durch die Schlitze und gleichzeitig durch die Kanäle verläuft, ergibt sich insgesamt eine optimierte Geometrie des Elastomermaterials beim den erfindungsgemäß hergestellten Kupplungssegmenten.

Eine weitere mögliche Maßnahme besteht darin, dass der mittels Wasserstrahlschneiden erzeugte Schnitt schräg zur Kupplungsachse verläuft. Durch den schrägen Schnittverlauf kann eine Druckspannungskomponente im Bereich der Schnittkante im Elastomerkörper unter Drehmomentbelastung der Kupplung erzeugt werden. Dadurch wird die Gefahr einer Ablösung des Elastomermaterials von den metallischen Anschlussflanschen im Bereich der Schnittkante reduziert. Der schräge Schnitt muss in Abhängigkeit von der Drehrichtung der Kupplung geführt werden, um den gewünschten Effekt zu erzielen. Dabei kann der Winkel zwischen Kupplungsachse und Schnittrichtung in Abhängigkeit vom Abstand zur Drehachse der Kupplung radial variieren. Dies korrespondiert wiederum zur radial anwachsenden Schubspannung bei Drehmomentbelastung der Kupplung.

Mit der Erfindung wird des Weiteren eine segmentierte, elastische Kupplung der eingangs genannten Art bereitgestellt, bei der erfindungsgemäß wenigstens ein Kupplungssegment gemäß dem Verfahren nach einer der vorbeschriebenen Ausgestaltungen oder einer beliebigen Kombination derselben hergestellt ist.

Vorzugsweise ist die segmentierte, elastische Kupplung als segmentierte, ringförmig ausgebildete, drehelastische Wellenkupplung mit wenigstens zwei in Umfangsrichtung angeordneten Kupplungssegmenten ausgebildet.

Weitere Vorteile und Merkmale der vorliegenden Erfindung werden im Folgenden anhand der beigefügten Figuren näher erläutert. Dabei zeigen
- Figur 1:: eine perspektivische Darstellung eines Ausführungsbeispiels einer auf herkömmlichem Wege hergestellten Kupplungskörpers;
- Figur 2:: eine perspektivische Darstellung der in Figur 1 gezeigten drehelastischen Wellenkupplung nach Durchführung des erfindungsgemäßen Verfahrens;
- Figur 3:: eine perspektivische Darstellung eines Ausführungsbeispiels einer erfindungsgemäß hergestellten segmentierten, drehelastischen Wellenkupplung mit kurvenförmiger Schnittführung beim Wasserstrahlschneiden;
- Figur 4:: eine perspektivische Darstellung eines Ausführungsbeispiels einer erfindungsgemäß hergestellten segmentierten, drehelastischen Wellenkupplung mit variablem Schnittwinkel beim Wasserstrahlschneiden;
- Figur 5:: eine perspektivische Darstellung eines weiteren Ausführungsbeispiels einer erfindungsgemäß hergestellten segmentierten, drehelastischen Wellenkupplung.

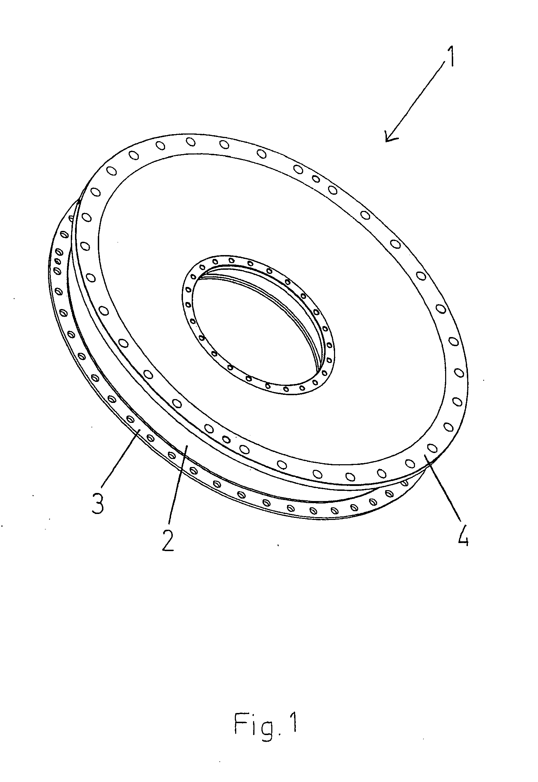

Figur 1 zeigt eine perspektivische Darstellung eines Ausführungsbeispiels eines auf herkömmlichem Wege hergestellten Kupplungskörpers 1 in Form einer ringförmig ausgebildeten, drehelastischen Wellenkupplung. Der Kupplungskörper 1 weist einen ringförmig ausgebildeten Elastomerkörper 2 auf, der zwischen zwei ringförmig ausgebildeten, metallischen Anschlussflanschen 3 und 4 angeordnet ist. Der Elastomerkörper 2 und die beiden Anschlussflansche 3 und 4 sind koaxial zueinander ausgerichtet. Die metallischen Anschlussflansche 3 und 4 sind vorab in einem Gießverfahren hergestellt worden. Der Elastomerkörper 2 ist durch Vulkanisation stoffschlüssig und drehmomentübertragend mit den Anschlussflanschen 3 und 4 verbunden.

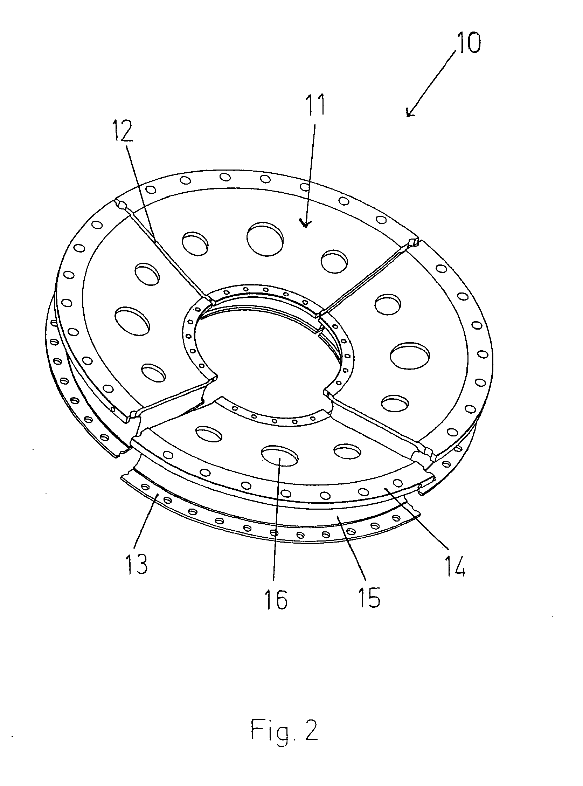

Figur 2 zeigt eine perspektivische Darstellung des in Figur 1 gezeigten Kupplungskörpers 1 nach Durchführung des erfindungsgemäßen Verfahrens, wodurch eine segmentierte, elastische Kupplung 10 in Form einer ringförmig ausgebildeten, drehelastischen Wellenkupplung mit vier in Umfangsrichtung hintereinander angeordneten Kupplungssegmenten 11 hergestellt wird. Bei der Herstellung dieser segmentierten, elastischen Kupplung 10 wurde der in Figur 1 gezeigte Kupplungskörper 1 mittels Wasserstrahlschneiden in Form von radialen Schnitten 12 in die vier Kupplungssegmente 11 unterteilt.

Jedes Kupplungssegment 11 weist zwei Anschlussflanschsegmente 13 und 14 auf, zwischen denen ein Elastomerkörpersegment 15 angeordnet ist. An jedem Kupplungssegment 11 sind zudem drei durchgehende, axiale Lüftungsöffnungen 16 durch Wasserstrahlschneiden ausgebildet. Die durchgehenden, axialen Lüftungsöffnungen 16 weisen unterschiedliche Durchmesser auf, wobei die beiden endseitigen Lüftungsöffnungen 16 denselben Durchmesser und die mittige Lüftungsöffnung 16 einen größeren Durchmesser aufweist. Die durchgehenden, axialen Lüftungsöffnungen 16 können vor dem Zerteilen des in Figur 1 gezeigten Kupplungskörpers 1 mittels Wasserstrahlschneiden oder auch danach in die einzelnen Kupplungssegmente 11 eingebracht werden.

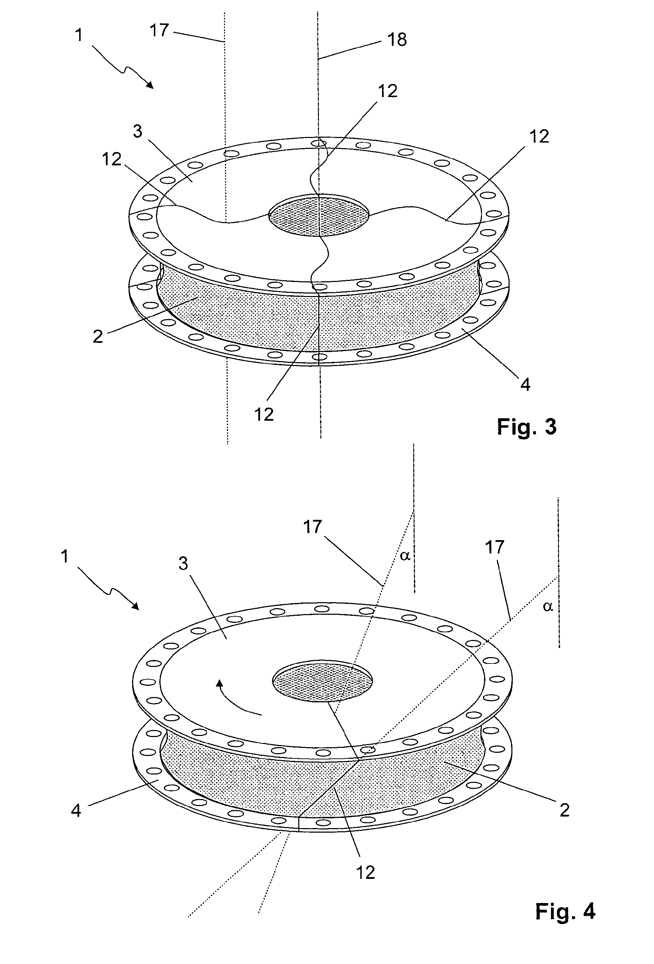

Die Figur 3 zeigt ein Ausführungsbeispiel, bei dem der Kupplungskörper 1 durch vier radiale Schnitte 12 in Segmente zerteilt wird. Die radialen Schnitte 12 haben einen kurvenförmigen Verlauf, wobei die Schnittrichtung 17, veranschaulicht durch die gestrichelte Linie in Figur 3, parallel zur Kupplungsachse 18 verläuft.

Bei dem in Figur 4 gezeigten Ausführungsbeispiel verläuft der mittels Wasserstrahlschneiden erzeugte Schnitt 12 schräg zur Kupplungsachse, wobei der Winkel α zwischen Kupplungsachse 18 und Schnittrichtung 17 radial, d. h. in Abhängigkeit vom Abstand von der Drehachse der Kupplung, variiert. Zur Drehachse der Kupplung hin nimmt der Winkel α kontinuierlich ab. Dadurch kann erreicht werden, dass bei einer Drehmomentbelastung der fertig hergestellten Kupplung, die eine relative Verdrehung des Anschlussflansches 3 gegenüber dem Anschlussflansch 4 in der in Figur 4 angedeuteten Pfeilrichtung bewirkt, eine Druckspannungskomponente im Elastomerkörper im Bereich der Schnittkante 12 erzeugt wird, dadurch wird die Gefahr einer Ablösung des Elastomermaterials von den metallischen Anschlussflanschen 3, 4 im Bereich der Schnittkante reduziert. In der Figur 4 ist der Übersichtlichkeit halber nur ein einzelner Schnitt 12 dargestellt. Es versteht sich, dass mehrere Schnitte über den Umfang des Kupplungskörpers 1 verteilt angeordnet sind, um die Kupplungssegmente herzustellen.

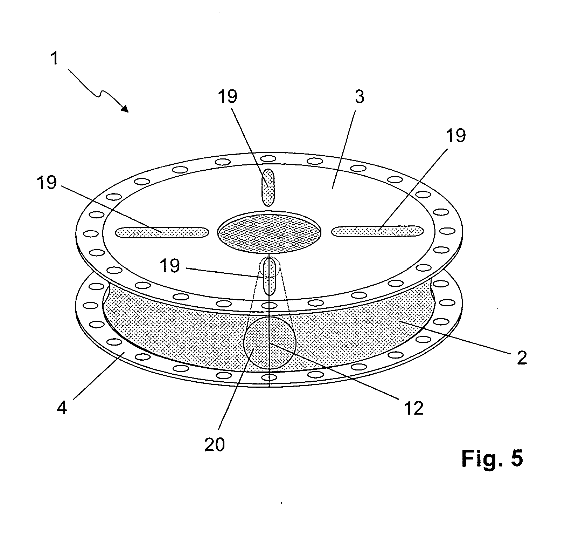

Bei dem Ausführungsbeispiel nach Figur 5 weisen die Anschlussflansche 3 und 4 Ausnehmungen in Form von endseitig geschlossenen radialen Schlitzen 19 auf. Die radialen Schlitze 19 sind von dem Elastomerkörper 2 durchsetzt. Der Schnitt 12 verläuft, wie in Figur 5 angedeutet, durch die Schlitze 19, sodass das Material des Elastomerkörpers 2 im Bereich der Schnitte 12 um die Metallkanten der Anschlussflansche 3, 4 herum gelegt ist. Weiterhin ist bei dem in Figur 5 dargestellten Ausführungsbeispiel aus dem Elastomerkörper 2 ein in Radialrichtung verlaufender kegelförmiger Kanal 20 ausgeschnitten. Die Schnittführung verläuft bei dem Wasserstrahlschneiden, wie in Figur 5 zu erkennen ist, parallel zur Längsachse des Kanals 20. Dies bewirkt, dass das Material des Elastomerkörpers 2 im Bereich der Schnittkante mehr oder weniger tangential auf die Anschlussflansche 3, 4 zuläuft. Durch diese Formgebung wird wiederum erreicht, dass das Material des Elastomerkörpers 2 bei Drehmomentbelastung der fertig hergestellten Kupplung nicht reißt und sich nicht von den metallischen Anschlussflanschen 3, 4 im Bereich der Segmentkanten ablöst. Auch in Figur 5 ist der Übersichtlichkeit halber nur ein einzelner Schnitt 12 angedeutet. Es versteht sich, dass mehrere Schnitte über den Umfang des Kupplungskörpers 1 verteilt angeordnet werden müssen, um die Kupplungssegmente in der gewünschten Form und Anzahl zu erhalten.

## Patentansprüche

1. Verfahren zum Herstellen eines Kupplungssegmentes (11) einer segmentierten, elastischen Kupplung (10), wobei ein Elastomerkörper (2) zwischen zwei metallischen Anschlussflanschen (3, 4) angeordnet und der Elastomerkörper (2) durch Vulkanisation zur Ausbildung eines Kupplungskörpers (1) stoffschlüssig mit den beiden Anschlussflanschen (3, 4) verbunden wird,
**dadurch gekennzeichnet,**
**dass** das Kupplungssegment (11) mittels Wasserstrahlschneiden aus dem Kupplungskörper (1) ausgeschnitten wird, wobei der Wasserstrahl den Elastomerkörper (2) und wenigstens einen der beiden Anschlussflansche (3, 4) schneidet.

2. Verfahren nach Anspruch 1, **dadurch gekennzeichnet, dass** die metallischen Anschlussflansche (3, 4) vorab zumindest teilweise in einem Gießverfahren hergestellt werden.

3. Verfahren nach Anspruch 1 oder 2, **dadurch gekennzeichnet, dass** an dem Kupplungssegment (11) wenigstens eine durch das gesamte Kupplungssegment (11) verlaufende axiale Lüftungsöffnung (16) mittels Wasserstrahlschneiden ausgebildet wird, die sich von einem Anschlussflansch (3, 4) zum anderen erstreckt.

4. Verfahren nach einem der vorhergehenden Ansprüche, **dadurch gekennzeichnet, dass** ein ringförmig ausgebildeter Elastomerkörper (2) und zwei ringförmig ausgebildete metallische Anschlussflansche (3, 4) durch Vulkanisation zu dem Kupplungskörper (1) verbunden werden.

5. Verfahren nach Anspruch 4, **dadurch gekennzeichnet, dass** das Kupplungssegment (11) durch wenigstens zwei radiale Schnitte (12) an dem Kupplungskörper (1) hergestellt wird.

6. Verfahren nach einem der Ansprüche 1-5, **dadurch gekennzeichnet, dass** die Anschlussflansche (3, 4) Ausnehmungen (19) aufweisen, die von dem Elastomerkörper (2) durchsetzt sind.

7. Verfahren nach Anspruch 6, **dadurch gekennzeichnet, dass** die Ausnehmungen (19) endseitig geschlossene radiale Schlitze sind.

8. Verfahren nach Anspruch 6 oder 7, **dadurch gekennzeichnet, dass** die Schnittführung beim Wasserstrahlschneiden durch die Ausnehmungen (19) verläuft.

9. Verfahren nach einem der Ansprüche 1 bis 8, **dadurch gekennzeichnet, dass** aus dem Elastomerkörper (2) wenigstens ein in Radialrichtung der Kupplung (10) verlaufender Kanal (20) ausgeschnitten wird.

10. Verfahren nach Anspruch 9, **dadurch gekennzeichnet, dass** der Durchmesser des Kanals (20) in Radialrichtung der Kupplung (10) von innen nach außen zunimmt.

11. Verfahren nach Anspruch 9 oder 10, **dadurch gekennzeichnet, dass** die Schnittführung beim Wasserstrahlschneiden parallel zur Längsachse des Kanals (20) verläuft.

12. Verfahren nach einem der Ansprüche 1 bis 11, **dadurch gekennzeichnet, dass** der mittels Wasserstrahlschneiden erzeugte Schnitt (12) schräg zur Kupplungsachse (18) verläuft.

13. Verfahren nach Anspruch 12, **dadurch gekennzeichnet, dass** der Winkel (α) zwischen Kupplungsachse (18) und Schnittrichtung (17) radial variiert.

14. Segmentierte, elastische Kupplung (10) mit wenigstens zwei Kupplungssegmenten (11), die zur Ausbildung der Kupplung (10) miteinander verbindbar sind,
**dadurch gekennzeichnet,**
**dass** wenigstens ein Kupplungssegment (11) gemäß dem Verfahren nach einem der vorhergehenden Ansprüche hergestellt ist.

15. Segmentierte, elastische Kupplung (10) nach Anspruch 14, **dadurch gekennzeichnet, dass** sie als segmentierte, ringförmige, drehelastische Wellenkupplung mit wenigstens zwei in Umfangsrichtung hintereinander angeordneten Kupplungssegmenten (11) ausgebildet ist.

## Claims

1. Method for the production of a coupling segment (11) of a segmented, elastic coupling (10), wherein an elastomer body (2) is disposed between two metallic connection flanges (3, 4), and the elastomer body (2) is connected with the two connection flanges (3, 4) in material-fit manner, by means of vulcanization, to form a coupling body (1),
**characterized in that**
the coupling segment (11) is cut out from the coupling body (1) by means of water jet cutting, wherein the water jet cuts the elastomer body (2) and at least one of the two connection flanges (3, 4).

2. Method according to claim 1, **characterized in that** the metallic connection flanges (3, 4) are produced in advance, at least in part, using a casting method.

3. Method according to claim 1 or 2, **characterized in that** at least one axial ventilation opening (16) that runs through the entire coupling segment (11) is formed on the coupling segment (11) by means of water jet cutting, which opening extends from one connection flange (3, 4) to the other.

4. Method according to one of the preceding claims, **characterized in that** an elastomer body (2) configured in ring shape and two metallic connection flanges (3, 4) configured in ring shape are connected to form the coupling body (1), by means of vulcanization.

5. Method according to claim 4, **characterized in that** the coupling segment (11) is produced by means of at least two radial cuts (12) on the coupling body (1).

6. Method according to one of claims 1 to 5, **characterized in that** the connection flanges (3, 4) have recesses (19) through which the elastomer body (2) passes.

7. Method according to claim 6, **characterized in that** the recesses (19) are radial slits closed on the end side.

8. Method according to claim 6 or 7, **characterized in that** the cutting line during water jet cutting runs through the recesses (19).

9. Method according to one of claims 1 to 8, **characterized in that** at least one channel (20) that runs in the radial direction of the coupling (10) is cut out of the elastomer body (2).

10. Method according to claim 9, **characterized in that** the diameter of the channel (20) increases from the inside to the outside in the radial direction of the coupling (10).

11. Method according to claim 9 or 10, **characterized in that** the cutting line during water jet cutting runs parallel to the longitudinal axis of the channel (20).

12. Method according to one of claims 1 to 11, **characterized in that** the cut (12) produced by means of water jet cutting runs at a slant to the coupling axis (18).

13. Method according to claim 12, **characterized in that** the angle (α) between coupling axis (18) and cut direction (17) varies radially.

14. Segmented, elastic coupling (10) having at least two coupling segments (11), which can be connected with one another to form the coupling (10),
**characterized in that**
at least one coupling segment (11) is produced according to the method according to one of the preceding claims.

15. Segmented, elastic coupling (10) according to claim 14, **characterized in that** it is configured as a segmented, ring-shaped, rotationally elastic shaft coupling having at least two coupling segments (11) disposed one behind the other in the circumference direction.

## Revendications

1. Procédé de fabrication d'un segment d'accouplement (11) d'un accouplement élastique segmenté (10), un corps élastomère (2) étant disposé entre deux flasques métalliques (3, 4) et le corps élastomère (2) étant attaché solidairement par matière aux deux flasques (3, 4) par vulcanisation,
**caractérisé en ce que** le segment d'accouplement (11) est découpé du corps d'accouplement (1) par découpe au jet d'eau, le jet d'eau découpant le corps élastomère (2) et au moins un des deux flasques (3, 4).

2. Procédé selon la revendication 1, **caractérisé en ce que** les flasques métalliques (3, 4) sont réalisés préalablement au moins partiellement selon un procédé de moulage.

3. Procédé selon la revendication 1 ou 2, **caractérisé en ce qu'**il est formé sur le segment d'accouplement (11) par découpe au jet d'eau, au moins une ouverture d'aération axiale (16) qui traverse le segment d'accouplement (11) entier et s'étend d'un flasque (3, 4) à l'autre.

4. Procédé selon l'une des revendications précédentes, **caractérisé en ce qu'**un corps élastomère (2) de forme annulaire et deux flasques métalliques (3, 4) de forme annulaire sont réunis par vulcanisation pour former le corps d'accouplement (1).

5. Procédé selon la revendication 4, **caractérisé en ce que** le segment d'accouplement (11) est réalisé sur le corps d'accouplement (1) par au moins deux coupes radiales (12).

6. Procédé selon l'une des revendications 1 à 5, **caractérisé en ce que** les flasques (3, 4) comportent des évidements (19) traversés par le corps élastomère (2).

7. Procédé selon la revendication 6, **caractérisé en ce que** les évidements (19) sont des fentes radiales fermées à leurs extrémités.

8. Procédé selon la revendication 6 ou 7, **caractérisé en ce que** le trajet du jet d'eau lors de la découpe au jet d'eau passe par les évidements (19).

9. Procédé selon l'une des revendications 1 à 8, **caractérisé en ce qu'**il est découpé du corps élastomère (2) au moins un canal (20) s'étendant dans la direction radiale de l'accouplement (10).

10. Procédé selon la revendication 9, **caractérisé en ce que** le diamètre du canal (20) augmente, dans la direction radiale de l'accouplement (10), de l'intérieur vers l'extérieur.

11. Procédé selon la revendication 9 ou 10, **caractérisé en ce que** le trajet du jet d'eau lors de la découpe au jet d'eau est parallèle à l'axe longitudinal du canal (20).

12. Procédé selon l'une des revendications 1 à 11, **caractérisé en ce que** la coupe (12) obtenue par la découpe au jet d'eau est incliné par rapport à l'axe (18) de l'accouplement.

13. Procédé selon la revendication 12, **caractérisé en ce que** l'angle (α) entre l'axe (18) de l'accouplement et la direction (17) de la coupe varie radialement.

14. Accouplement élastique segmenté (10) ayant au moins deux segments d'accouplement (11) adaptés pour être reliés l'un à l'autre pour former l'accouplement (10), **caractérisé en ce qu'**au moins un segment d'accouplement (11) est réalisé selon l'une des revendications précédentes.

15. Accouplement élastique segmenté (10) selon la revendication 14, **caractérisé en ce qu'**il est formé comme accouplement d'arbres annulaire segmenté et élastique en rotation ayant au moins deux segments d'accouplement (11) disposés l'un après l'autre dans le sens périphérique.
